# EUROPEAN PATENT SPECIFICATION

(11) **EP 3 881 047 B1**
(45) Date of publication and mention of the grant of the patent: **29.03.2023**
(21) Application number: 19821203.7
(22) Date of filing: 15.11.2019
(51) Int. Cl.: G01M 5/00

(54) **SYSTEM FOR DETECTING STRUCTURAL MOVEMENTS/DISPLACEMENTS/CAVE-IN**
SYSTEM ZUM ERKENNEN VON STRUKTURELLEN BEWEGUNGEN/VERLAGERUNGEN/EINSTÜRZEN
SYSTÈME DE DÉTECTION DE MOUVEMENTS/DÉPLACEMENTS/EFFONDREMENT STRUCTURELS

(30) Priority: 15.11.2018 IT 201800010358
(43) Date of publication of application: 22.09.2021
(73) Proprietor: TENET S.R.L. CON UNICO SOCIO, 31032 Casale Sul Sile (TV) (IT)
(72) Inventor: CAVALLI, Manuele, 31032 Casale Sul Sile (TV) (IT)
(74) Representative: Maroscia, Antonio
(86) International application number: PCT/IB2019/059845
(87) International publication number: WO 2020/100109

(56) References cited:
- US-A- 5 425 275
- US-A1- 2005 284 232

## Description

### CROSS-REFERENCE TO RELATED APPLICATIONS

This patent application claims priority from Italian patent application no. 102018000010358 filed on November 15, 2018.

### TECHNICAL FIELD

The invention relates to a system for detecting structural movements/displacements/cave-in.

In particular, the invention relates to the determination/detection of the position in which a movement/displacement/cave-in takes place in a structure, such as, for example, a bridge or a building or similar structures, to which explicit reference will be made in the description below without because of this loosing in generality.

### PRIOR ART

As it is known, nowadays there is a strong need to keep the structural integrity of a building under control so as to be able, on the one hand, to detect in advance possible danger conditions associated, for example, with the occurrence of structural cave-in states and, on the other hand, to quickly locate the exact position in which the cave-in takes place.

To this aim, different structural monitoring systems were conceived over the years, which are generally based on the use of "point by point" movement sensors, such as for example strain gauge and accelerometers.

However, the complexity and the high cost of these systems, as of today, has prevented them from becoming

widely spread and has limited their use to the sole specialized operators of the bundling industry, such as for example technicians and engineers. Moreover, these systems are limited to "point by point" detections and, hence, are not suited to determine phenomena of a superficial nature.

Therefore, there is a widely spread need to rely on simple and economic tools which are capable of providing, in real time, information on the structural state of a building and which can easily be used not only by specialized operators, but also by people who, despite not having specific technical knowledge, want to be warned in advance when critical structural conditions arise, for example, in their houses. Furthermore, people want to have more detailed information on the position and propagation of a given structural cave-in/movement.

### SUBJECT-MATTER OF THE INVENTION

Therefore, the object of the invention is to provide a system for detecting a structural movement/displacement/cave-in which is economic, simple to be installed and, at the same time, can easily be used by anyone.

A further object of the invention is to provide a system which allows entire areas to be mapped, identifying the coordinates of the position of the point of origin of the movement as well as the propagation thereof.

This object is reached by the invention, as it relates to a system for detecting a structural movement/displacement as set forth in the appended claims.

US 5 425 275 A discloses a detecting tape for detecting strains or breaks in the surface of a boat hull.

### BRIEF DESCRIPTION OF THE DRAWINGS

The invention will now be described with reference to the accompanying drawings, showing a non-limiting embodiment thereof, wherein:
- Figure 1 shows a system for detecting a structural movement/displacement according to the invention,
- Figure 2 shows a detector tape comprised in the system shown in Figure 1,
- Figure 3 is a longitudinal section of the detector tape shown in Figure 1;
- Figure 4 is a longitudinal section of a measurement tape of the system shown in Figure 1;
- Figure 5 schematically shows the conductors and the circuit switches comprised the detector tape shown in Figure 1.

### PREFERRED EMBODIMENT OF THE INVENTION

The invention will now be described in detail with reference to the accompanying Figures, so as to allow a person skilled in the art to carry it out and use it. Possible changes to the embodiments described will be immediately evident to skilled people and the generic principles described can be applied to other embodiments and applications without for this reason going beyond the scope of protection of the invention as it is defined in the appended claims. Therefore, the invention cannot be considered as limited to the embodiments described and shown herein, but it has to be associated with the widest scope of protection possible in accordance with the principles and the features described and claimed herein.

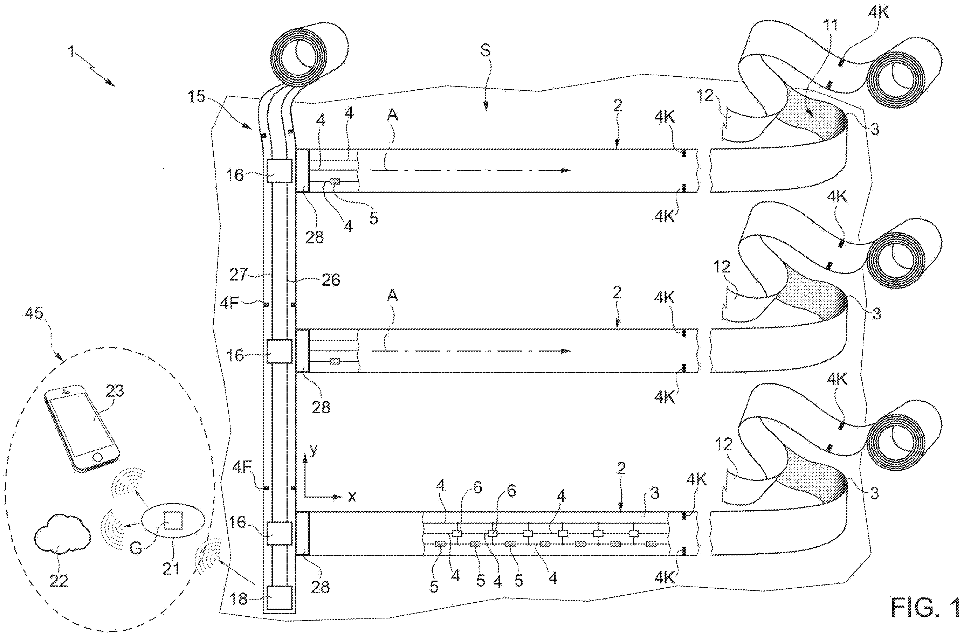

With reference to Figure 1, number 1 indicates, as a whole, a detection system 1 designed to detect movements/displacements in a structure. In addition or as an alternative, the detection system 1 conveniently has a matrix configuration and is further designed to determine the coordinates of the position in which a movement/displacement is generated in the structure. Furthermore, the system is designed to map the propagation of the displacement in the structure.

By displacement/movement we obviously also mean a local vibration and/or a wave propagating in the structure.

The structure can preferably correspond to at least part of a building. However, the invention, as set forth in the description below, is not limited to the monitoring of a building, but can also be applied to any construction/article which requires a structural monitoring, such as for example a bridge, the inner wall of a gallery or the like.

According to a preferred embodiment, the detection system 1 comprises one or more detector tapes 2, each having an oblong shape, preferably a rectangular shape. Each detector tape 2 is preferably arranged so as to rest, with its main lower surface, on a surface portion S of the structure to be monitored and has, when it rests and is stretched out on the latter, a longitudinal axis A.

In order to increase the understanding and the clarity of the following description, Figure 1 shows a reference X-Y Cartesian system coplanar to the surface portion S to be monitored, which, in the example shown herein, corresponds to a flat surface. However, the surface portion on which the detector tapes 2 are applied can have any shape other than the flat one, for example a concave shape, a convex shape, etc..

In the example shown herein, the detector tapes 2 are arranged on the surface portion S parallel to the another and to the axis X of the X-Y Cartesian system, side by side and at predetermined mutual distances relative to the axis Y.

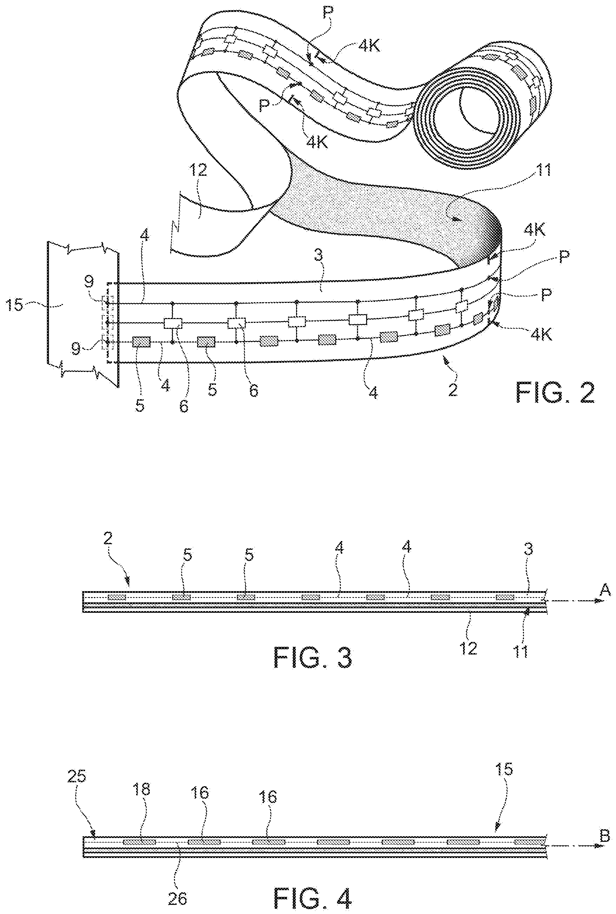

According to a preferred embodiment shown in Figures 2-4, the detector tapes 2 can have a layered structure comprising at least one support layer 3. The support layer 3 is tape-shaped and can comprise a thin film made of a high-flexibility and electrically insulating material. The high flexibility of the support layer 3, on the one hand, allows the detector tape 2 to be rolled up so as to conveniently obtain a roll which is suited to be stored and transported and, on the other hand, allows the detector tape 2 to adjust to the shape of the surface portion S to be monitored.

The support layer 3 can be obtained from a film made of a high-flexibility (high-pliability) material, such for example a rubber material and/or a plastic material and/or a polymer material, or from a paper material, a fabric material and the like. The Applicant found out that a film that can conveniently be used to manufacture the support layer 3 is a polyimide-based film. In particular, the Applicant found out that a particularly convenient support layer 3 can comprises a thin film with materials such as KAPTON^{®} or FR4.

Preferably, the width of the tape 2 can conveniently range from approximately 10 mm to approximately 25 mm. Preferably, the thickness of the support layer 3 can range from 50 microns to 200 microns. However, the support layer 3 can be sized so as to ensure a relatively high sturdiness, namely so as to be sturdy enough not to deteriorate/damage itself in the specific building application to which it is dedicated.

With reference to the accompanying figures, the detector tapes 2 comprise a plurality of electric conductor branches 4, a plurality of electric resistor components 5 and a plurality of electric/electronic circuits.

The conductor branches 4 are arranged in/on said support layer 3 adjacent to one another along the longitudinal axis A. The conductor branches 4 are made of an electrically conductor material, for instance copper or aluminium or the like. According to a preferred explanatory embodiment which is shown in the accompanying Figures, the conductor branches 4 can be side by side and spaced apart from one another at a predetermined distance, in mutually adjacent positions, and extend along the detector tape 2 straight and parallel to said longitudinal axis A. Preferably, the conductor branches 4 can be threadlike. However, the conductor branches 4 could also be, as an alternative or in addition, plate-like (metal straps) and/or have any similar shape deemed to be suited for the purpose of the invention.

The resistor components 5 are arranged in/on said support layer 3 in predetermined positions along the longitudinal axis A. The resistor components 5 are preferably connected to one another in series by means of one of the conductor branches 4. In the example shown in the accompanying Figures, the resistor components 5 comprise resistors which are connected to one another in series along a common conductor branch 4. The resistor components 5 can be arranged at predetermined distances from one another along the axis A and have respective predetermined resistances.

The mutual distance between each pair of resistor components 5 arranged immediately adjacent along the axis A depends on the resolution/precision of the requested detection and/or on the length of the detector tape 2. For example, the distance between each resistor component and the following resistor component along the detector tape 2 could range from approximately 20 cm to approximately 70 cm.

As far as the electric/electronic circuits are concerned, they are arranged on/in the support layer 3 and are electrically connected to respective segments of the conductor branch 4 comprised between the successive resistor components 5. Each electric/electronic circuit 6 is structured to change the resistance in the terminals of said movement/displacement detector tape in a predetermined manner in response to a movement/displacement of said support layer 3 in the area of said electric/electronic circuit 6.

According to a preferred embodiment, the electric/electronic circuits may comprise circuit switches 6 arranged in/on said support layer 3 in respective predetermined positions. The circuit switches 6 are arranged in/on said support layer 3 so as to be spaced apart from one another and are each configured to electrically connect a conductor branch 4 to a connection segment of another conductor branch 4 comprised between two consecutive resistor components 5.

Each circuit switch 6 is configured so as to switch between an opening state and a closing state in response to a movement/displacement of the portion of the tape 2 housing the circuit switch 6. The switching of a circuit switch 6 determines a change in resistance, which can be measured on the detector tape 2 and indicates the position of the switched circuit switch 6 along the detector tape 2. The determination of the position of the switched circuit switch 6 allows the position of the surface portion S where the movement/displacement took place to be located. In other words, the position of the switched circuit switch 6 corresponds to the X coordinate where the movement/displacement took place. The Y coordinate of the position where the movement/displacement took place on the surface portion S, on the other hand, is associated with the Y coordinate of the detector tape 2 containing the switched circuit switch 6.

According to a preferred embodiment shown in the accompanying Figures, each circuit switch 6 can comprise an electronic switch module 7 and a sensor module or detector module 8. The electronic switch module 7 is configured to switch between the opening state and the closing state in response to a command signal. In the closing state, the electronic switch module 7 connects a conductor branch 4 to a connection segment of another conductor branch 4 comprised between two consecutive resistor components 5.

The detector module 8 can be configured to deliver the command signal to the electronic switch module 7 when it detects a movement/displacement of the surface portion of the detector branch 2.

According to an explanatory embodiment shown in the accompanying Figures, the electronic switch module 7 can comprise a transistor, for example a bipolar junction transistor. However, the electronic switch module 7 can comprise any similar electronic component which is capable of switching between an opening state and a closing state - and vice versa - based on a command signal.

As far as the detector module 8 is concerned, it can comprise a vibration sensor or an acceleration sensor (accelerometer) or a deformation sensor (strain gauge).

The Applicant found it advantageous to use a detector module 8 comprising a micro vibration sensor. Furthermore, the Applicant found it advantageous to use a micro vibration sensor with a moving ball. A particularly performing moving-ball micro vibration sensor can correspond to a sensor belonging to one of the following categories MVS1006.01, MVS0608.2, MVS0409.01, MVS0409.02 provided by SENSOLUTE - SMART SENSOR SOLUTIONS.

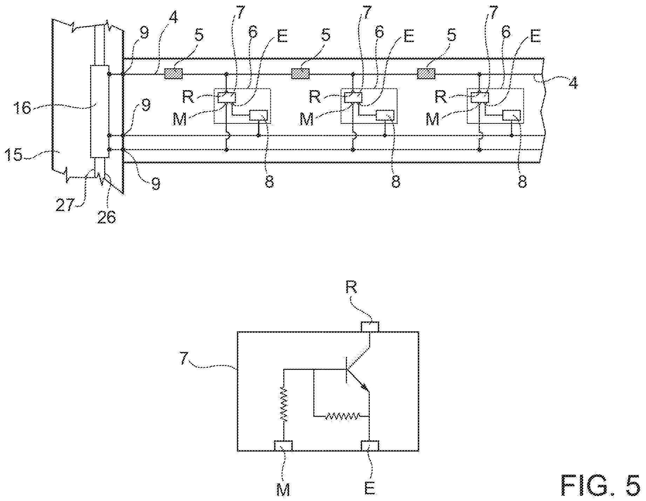

According to a preferred embodiment shown in the accompanying Figures, the detector tape 2 comprises three conductor branches 4, which have, at the ends, respective connection terminals 9. The electronic switch module 7 can preferably have three terminals 9. A first terminal of the switch module 7, which is indicated with R in Figure 5, is connected to a connection segment of a first conductor branch 4 connecting two consecutive resistors 5, a second terminal, which is indicated with M in Figure 5, is connected to a second conductor branch 4 and a third terminal, which is indicated with E in Figure 5, is connected to a third conductor branch 4 through the detector module 8.

According to an embodiment, the second and the third conductor branches 4 can have respective reference potentials, preferably a potential Vcc (for example 5 Volts) and a ground potential Vgnd. In this case, one of the conductor branches 4, preferably the first one, namely the one connected to the resistor components 5, can correspond to a branch for reading the resistance of the detector tape 2 used to determine the position of the movement/displacement along the axis X. In one of the possible embodiments in which the electronic switch module 7 corresponds to a junction transistor, it can have a first terminal, for example a collector terminal, connected to the terminal R, a second terminal, for example a base terminal, connected to the terminal M through a resistor, and a third terminal, for example an emitter terminal, which is connected to the terminal E and to the base terminal through a resistor.

In use, for example, a movement/displacement of the surface portion S taking place in a position having coordinates X1 and Y1 is detected by a detector module 8 arranged in the position X1 of the detector tape 2 placed in Y1. The detector module 8, then, generates the command signal, which causes the electronic switch module 7 to switch from the opening state to the closing state. The electronic switch module 7, in the closing state, electrically connects the segment of the first conductor branch 4 arranged downstream of a resistor component 5 associated with the switched electronic switch module 7 and the third conductor branch 4. Then, the electronic switch module 7 creates a selective electric connection between the two conductor branches 4 imposing a predetermined resistance between the terminals 9 of the detector tape 2 whose value indicates the coordinate X1 where the connection between the conductor branches 4 was operated.

With reference to the accompanying Figures, the conductor branches 4, the resistor components 5 and the circuit switches 6 can be embedded/incorporated in the support layer 3. The support layer 3 can preferably be made of a water impermeable material or of similar materials.

According to an explanatory embodiment shown in the accompanying Figures, the terminals 9 can conveniently be obtained by cutting the detector tape 2 in preferential cutting points. On the surface of the detector tape 2 there can conveniently be notches 4K, for example printed at predetermined distances from one another and relative to the resistor components 5 and to the circuit switches 6, indicating the preferential cutting points. In this way, the installer is instructed on where to cut the tape 2 in order to obtain the terminals 9, thus preventing the resistor components 5 from being damaged.

According to an explanatory embodiment shown in Figure 2, the detector tape 2 has, along the conductor branches 4 in the area of the notches 4K, pads P, which are designed to form, after the tape 2 has been cut, the terminals 9. The pads P are made of an electrically conductor material, for example copper or the like, and are shaped so as to facilitate the electrical connection to electric terminals/connectors or the like. The pads P can be placed on/in the support layer 3 of the tape 2 along the conductor branches 4 in the area of the notches 4K. In use, the cut of the tape 2 approximately crosswise to the longitudinal axis A in the area of the notches 4K allows for the creation of pads P at the cut longitudinal end of the detector tape 2, thus forming the terminals 9.

The detector tape 2 can preferably comprise an adhesive layer 11, which is suited to firmly fix the detector tape 2 on the structure. The Applicant found out, for example, that it could be convenient to use a tape-shaped removable film 12, which covers the adhesive layer 11 and, in use, is separated from the detector tape 2 in order to allow the detector tape 2 to be fixed on the surface portion S. The manufacturing and/or the fixing of the conductor branches 4, of the resistor components 5 and of the circuit switches 6 on the support layer 3 can be performed through any mounting process, such as for example, through deposition, photolithography, plasma, printing with electrostatic adhesives, and using inks or conductive pastes, graphite, etc..

According to an explanatory embodiment shown in Figure 1, the system 1 can further comprise a measurement tape 15, a plurality of electronic modules 16 and an electronic control unit 18.

According to a preferred embodiment shown in Figure 1, the measurement tape 15 can substantially extend parallel to the axis Y orthogonal to the detector tapes 2 so as to have a lateral edge adjacent to the terminals 9 of the detector tapes 2.

The electronic modules 16 can conveniently be arranged in the measurement tape 15 one following the other at predetermined distances along the tape 2. Each electronic module 16 can be provided with and/or be connected to electric terminals designed to be connected, in use, to the terminals 9 of a detector tape 2 and is configured to determine/measure, in use, the resistance thereof.

The electronic control unit 18 can preferably be arranged in the measurement tape 15 and is configured to receive the measured resistances from the electronic measurement modules 16.

The electronic control unit 18 can be configured to determine the position, according to the X,Y coordinates, of a structural movement/displacement depending on the resistances of the detector tapes 2 and on the positions thereof relative to the axis Y.

The electronic control unit 18 can be configured to communicate with a network system 45.

The network system 45 can comprise, for example, a home network 21 and/or a remote processing system 22 and a user terminal 23.

The home network 21 can comprise a gateway G, which performs a short-range communication to communicate with the electronic control unit 18 and/or with the user terminal 23. The short-range communication can be, for example, a wireless communication, for instance Wi-Fi, Wireless, Bluetooth, Zigbee or the like. The gateway can further perform a long-range communication and operate, for example, according to the Lo.Ra. technology in order to communicate with an internet/phone network so as to transmit data to the remote processing system 22 and/or to the user terminal 23.

The user terminal 23 can correspond to a common portable user device, for example smartphones, personal digital assistants (PDAs), portable multimedia players (PMPs), configured to execute processing programs, for example mobile applications (APP).

As far as the remote processing system 22 is concerned, it can comprise a "cloud" computing system or the like.

The electronic control unit 18 can be configured to determine, by means of the detector tapes 2, the position of a movement/displacement occurred on the surface S and communicates the position to the network system 45. The electronic control unit 18 can be configured to store one or more positions associated with structural movements/displacements and to process these positions in order to determine/diagnose a structural state indicating a structural integrity condition. The processing of the positions associated with structural movements/displacements can lead, for example, to the determination of the presence of cracks or of local structural cave-in. The electronic control unit 18 can be configured to generate a graphic map indicating the structural movements/displacements. The graphic mapping can further indicate a propagation of the displacements in the monitored structure starting from a displacement origin point.

The electronic control unit 18 can further be configured to generate a signal indicating a maintenance and/or alarm request based on the result of the processing of the positions of the detected movements/displacements. This signal can be communicated by the electronic control unit 18 to the network system 45, for example to the user terminal 23 and/or the remote processing system 22.

The data/messages/signals and/or the data indicating the movement and the position where it took place and/or the maps can conveniently be displayed to a user through the display of the user terminal 23. The display of the user terminal 23 can preferably be used to display the maps associated with the detected displacement/s. The user terminal 23 can preferably be provided with a computing application which allows users to display maps indicating the propagation of the displacement and/or maps indicating the displacement origin point and/or maps indicating the vibration to which the structure is subjected and/or maps indicating the formation of cracks in the structure and any other graphic map indicating critical structural aspects deriving from vibrations/displacements.

With reference to Figure 4, the measurement tape 15 comprises a tape-shaped support layer 25, which extends along an axis B. The support layer 25 can incorporate, on the inside, the electronic measurement modules 16 and, preferably, though not necessarily, also the electronic control unit 18.

Preferably, the support layer 25 further incorporates a data exchange line 26 (bus), which connects the electronic measurement modules 16 and the electronic control unit 18 to one another so as to allow the latter to be supplied with the resistances of the tapes 2, and, preferably, though not necessarily, a power supply line 27. For example, the power supply line 27 can connect a power supply device present, for example, in the electronic control unit 18 to the electronic measurement modules 16.

On the measurement tape 15 there can be lateral connection terminals of the electronic measurement modules 16, which are designed to be connected to the connection terminals 9 of the detector tapes 2 through connectors 28.

According to an explanatory embodiment shown in Figure 1, the measurement tape 15 has notches 4F indicating the points in which the measurement tape 15 can be cut crosswise. The notches 4F are properly positioned in the space comprised between the electronic measurement modules 16, so that the cut of the measurement tape 15 does not damage them.

In use, a movement/displacement in a point of the structure, for example X1 and Y1, is detected by the detector module 8, which is placed in the coordinate X1 of the detector tape arranged in the coordinate Y1. The detection of the detector module 8 determines the closing of the corresponding switch module 7 in the area of the relative resistor component. This closing imposes upon the terminals 9 of the detector tape a resistance value indicating the position of the switch module 7.

The electronic measurement module 16 detects, namely measures, the resistance of the detector tape 2 and communicates it to the electronic control unit 18, which processes it in the way described above and then communicates the result of the processing to the network system 45.

The system described above is extremely advantageous as it allows manufacturers to reach the objects discussed above. The movements detected by the system can be used for static purposes, to assess the structural stability and to promptly warn a user or a surveillance station of the presence of a critical structural condition.

Finally, it is clear that the system described above can be subjected to changes and variations, without for this reason going beyond the scope of protection of the invention defined in the appended claims.

## Claims

1. A movement/displacement detector tape (2) which is configured to be arranged in/on a structure, comprising:
a support tape-shaped layer (3) made of electrically insulating material, that extends along a longitudinal axis (A) and is arranged in/on said structure,
a plurality of electric conductor branches (4) that are arranged in/on said support layer (3),
a plurality of electric resistor components (5) that are arranged in/on said support layer (2) and are electrically connected to one another through at least one said conductor branch (4) at predetermined distances from one another along said longitudinal axis (A) and have respective predetermined resistances,
a plurality of electric/electronic circuits (6) that are arranged in/on said support layer (3) and are electrically connected to respective sections of the conductor branch (4) included between the subsequent resistor components (5),
each said electric/electronic circuit (6) being structured for varying the resistance in the terminals of said movement/displacement detector tape in a prefixed manner, in response to a movement/displacement of said support layer (3) at said electric/electronic circuit ( 6),
wherein said movement/displacement detector tape (2) is **characterized by** comprising:
wherein said electric/electronic circuits (6) comprise respective circuit switches (6), that are arranged in/on said support layer (3) in respective prefixed positions and are each designed to switch between an open state and a closed state, in response to a movement/displacement of said support layer (3) in said positions, so as to electrically connect a conductor branch (4) to a section of another conductor branch (4) included between two resistor components (5); the switching of a circuit switch (6) determining a variation of electric resistance between the terminals (9) of said conductor branches (4) that depend on the position of said circuit switch (6) in said detector tape (2) and, is indicative of the position (X, Y) of said movement/displacement in said structure.

2. A movement/displacement detector tape (2) according to claim 1, wherein said circuit switches (6) comprise:
an electronic switch module (7) configured to switch between the open state and the closed state in response to a command signal, and
a movement detector module (8) designed to detect a movement of said structure and configured to provide the switch module (7) with the command signal when a movement/displacement of said structure has been detected.

3. A structural monitoring system (1) which is designed to detect movements/displacements in a structure wherein said detected displacements/movements comprise local vibration and/or a wave propagating in said structure,
said structural monitoring system comprising one or more movement/displacement detector tapes (2) according to claim 1.

4. The system according to claim 3, comprising a measurement tape (15) that comprises:
a support tape-shaped layer (25) made of electrically insulating material, that extends along a longitudinal axis (B) and is arranged in/on said structure in a position adjacent to the terminals (9) of said detector tapes (2),
a plurality of electronic modules (16) that are arranged in said support layer (25) one after the other at mutually prefixed distances along the measurement tape (15) at the respective reading nodes, and are each electrically connected to said terminals (9) of a relative detector tape (2) for determining/measuring a value indicative of the electric resistance present between the terminals (9) of the detector tape (2) itself,
processing means (18) that are arranged in said support layer (25) and are configured to receive values of the resistances determined in said detector tapes (2) from said electronic modules (16) and, to determine and transmit/provide the coordinates of the position of origin of the displacement/movement of said structure; the first coordinate (X) being determined based on the resistance value read; the second coordinate (Y) being determined based on the reading node of said resistance.

5. The system according to claim 4, where said processing means (18) are configured to communicate the position of the detected displacement/movement to a network system (45).

6. The system according to claim 5, wherein the network system (45) comprises a home network (21) and/or a remote processing system (22) and/or a user terminal (23).

7. The system according to any one of claims from 3 to 6, wherein said circuit switches (6) comprise:
an electronic switch module (7) configured to switch between the open state and the closed state in response to a command signal, and
a movement detector module (8) designed to detect a movement of said structure and configured to provide the switch module (7) with the command signal when a movement/displacement of said structure has been detected.

8. The system according to claim 7, wherein said movement detector module (8) comprises a ball vibration sensor.

9. The system according to any one of claims from 3 to 8, wherein:
said detector tapes (2) are arranged so as to have the respective longitudinal axes (A) approximately parallel to one another and so as to have the respective terminals (9) approximately aligned with one another;
said measurement tape (15) is arranged approximately orthogonal to the detector tapes (2) with a side edge approximately adjacent to the connection terminals (9) of said detector tapes (2);
said system comprising connector means for connecting the terminals (9) of said detector tapes (2) to respective connection terminals of said electronic measuring modules (16) of said measuring tape (15).

10. The system according to claim 7, wherein said detector module (8) comprise a vibration sensor or an acceleration sensor or a deformation sensor.

11. The system according to any of claims from 4 to 10, wherein said detector tape (2) comprises notches (4K) printed at predetermined distances from one another and relative to the resistor components (5) and to the circuit switches (6), indicating preferential cutting points.

12. The system according to any of claims from 4 to 11, wherein said detector tape (2) has, along said conductor branches (4) in the area of the notches (4K), pads P, which are designed to form terminals (9), after the tape 2 has been cut.

## Patentansprüche

1. Bewegungs-/Verschiebungsdetektorband (2), das konfiguriert ist, um in oder auf einer Struktur angeordnet zu werden, umfassend:
eine trägerbandförmige Schicht (3) aus elektrisch isolierendem Material, die sich entlang einer Längsachse (A) erstreckt und in oder auf der Struktur angeordnet ist;
mehrere elektrische Leiterzweige (4), die in oder auf der Trägerschicht (3) angeordnet sind;
mehrere elektrische Widerstandsbauelemente (5), die in oder auf der Trägerschicht (2) angeordnet sind und durch mindestens einen Leiterzweig (4) in vorbestimmten Abständen voneinander entlang der Längsachse (A) elektrisch miteinander verbunden sind und jeweils vorgegebene Widerstände aufweisen;
mehrere elektrische/elektronische Schaltungen (6), die in oder auf der Trägerschicht (3) angeordnet und elektrisch mit entsprechenden Abschnitten des Leiterzweigs (4) verbunden sind, der zwischen den nachfolgenden Widerstandskomponenten (5) eingeschlossen ist,
wobei jede elektrische/elektronische Schaltung (6) so strukturiert ist, dass sie den Widerstand in den Anschlüssen des Bewegungs-/Verschiebungs-Detektorbands in einer voreingestellten Weise als Reaktion auf eine Bewegung/Verschiebung der Trägerschicht (3) an der elektrischen/elektronischen Schaltung ändert (6),
wobei das Bewegungs-/Verschiebungs-Detektorband (2) **dadurch gekennzeichnet ist, dass**:
die elektrischen/elektronischen Schaltungen (6) jeweilige Schaltungsschalter (6) umfassen, die in oder auf der Trägerschicht (3) in jeweiligen vorangestellten Positionen angeordnet sind und jeweils so ausgelegt sind, dass sie zwischen einem offenen Zustand und einem geschlossenen Zustand umschalten als Reaktion auf eine Bewegung/Verschiebung der Trägerschicht (3) in den vorangestellten Positionen, um einen Leiterzweig (4) elektrisch mit einem Abschnitt eines anderen Leiterzweigs (4) zu verbinden, der zwischen zwei Widerstandskomponenten (5) eingeschlossen ist; wobei das Schalten eines Schaltungsschalters (6) eine Änderung des elektrischen Widerstands zwischen den Anschlüssen (9) der Leiterzweige (4) bestimmt, die von der Position des Schaltungsschalters (6) in dem Detektorband (2) abhängen, und die ist, die Position (X, Y) der Bewegung/Verschiebung in der Struktur anzeigt.

2. Bewegungs-ZVerschiebungsdetektorband (2) nach Anspruch 1, wobei die Schaltungsschalter (6) umfassen:
ein elektronisches Schaltmodul (7), das so konfiguriert ist, dass es als Reaktion auf ein Befehlssignal zwischen dem offenen Zustand und dem geschlossenen Zustand umschaltet, und
ein Bewegungserfassungsmodul (8), das dazu ausgelegt ist, eine Bewegung der Struktur zu erfassen, und konfiguriert ist, das Schaltmodul (7) mit dem Befehlssignal zu versorgen, wenn eine Bewegung/Verschiebung der Struktur erfasst wurde.

3. Strukturüberwachungssystem (1), das zum Erfassen von Bewegungen/Verschiebungen in einer Struktur ausgelegt ist, wobei die erfassten Verschiebungen/Bewegungen lokale Schwingungen und/oder eine sich in der Struktur ausbreitende Welle umfassen,
wobei das Strukturüberwachungssystem (1) ein oder mehrere Bewegungs-/Verschiebungs-Detektorbänder (2) nach Anspruch 1 umfasst.

4. System nach Anspruch 3, das ein Maßband (15) umfasst, das das Folgendes umfasst:
eine bandförmige Trägerschicht (25) aus elektrisch isolierendem Material, die sich entlang einer Längsachse (B) erstreckt und in oder auf der Struktur in einer Position neben den Anschlüssen (9) der Detektorbänder (2) angeordnet ist;
eine Vielzahl von elektronischen Modulen (16), die in der Trägerschicht (25) nacheinander in gegenseitig vorab festgelegten Abständen entlang des Maßbandes (15) an den jeweiligen Leseknoten angeordnet sind und jeweils mit den Anschlüssen (9) eines relativen Detektorbandes (2) elektrisch verbunden sind zum Bestimmen/Messen eines Wertes, der den elektrischen Widerstand anzeigt, der zwischen den Anschlüssen (9) des Detektorbandes (2) selbst vorhanden ist;
Verarbeitungsmittel (18), die in der Trägerschicht (25) angeordnet sind und konfiguriert sind, Werte der in den Detektorbändern (2) bestimmten Widerstände von den elektronischen Modulen (16) zu empfangen und die Koordinaten der Ursprungsposition der Verschiebung/Bewegung der Struktur zu bestimmen und zu übertragen/bereitzustellen, wobei die erste Koordinate (X) basierend auf dem gelesenen Widerstandswert bestimmt wird und wobei die zweite Koordinate (Y) basierend auf dem Leseknoten des Widerstands bestimmt wird.

5. System nach Anspruch 4, wobei die Verarbeitungsmittel (18) so konfiguriert sind, dass sie die Position der erfassten Verschiebung/Bewegung an ein Netzwerksystem (45) übermitteln.

6. System nach Anspruch 5, wobei das Netzwerksystem (45) ein Heimnetzwerk (21) und/oder ein Fernverarbeitungssystem (22) und/oder ein Benutzerendgerät (23) umfasst.

7. System nach einem der Ansprüche 3 bis 6, wobei die Schaltungsschalter (6) umfassen:
ein elektronisches Schaltmodul (7), das so konfiguriert ist, dass es als Reaktion auf ein Befehlssignal zwischen dem offenen Zustand und dem geschlossenen Zustand umschaltet, und
ein Bewegungserfassungsmodul (8), das dazu ausgelegt ist, eine Bewegung der Struktur zu erfassen, und konfiguriert ist, das Schaltmodul (7) mit dem Befehlssignal zu versorgen, wenn eine Bewegung/Verschiebung der Struktur erfasst wird.

8. System nach Anspruch 7, wobei das Bewegungsdetektormodul (8) eine Kugelvibrationsensor umfasst.

9. System nach einem der Ansprüche 3 bis 8, wobei:
die Detektorbänder (2) so angeordnet sind, dass die jeweiligen Längsachsen (A) ungefähr parallel zueinander sind und dass die jeweiligen Anschlüsse (9) ungefähr aufeinander ausgerichtet sind;
das Maßband (15) ungefähr orthogonal zu den Detektorbändern (2) angeordnet ist, wobei eine Seitenkante ungefähr neben den Verbindungsanschlüssen (9) der Detektorbänder (2) liegt,
wobei das System Verbindungsmittel zum Verbinden der Anschlüsse (9) der Detektorbänder (2) mit jeweiligen Verbindungsanschlüssen der elektronischen Messmodule (16) des Maßbands (15) umfasst.

10. System nach Anspruch 7, wobei das Detektormodul (8) einen Vibrationssensor oder einen Beschleunigungssensor oder einen Verformungssensor umfasst.

11. System nach einem der Ansprüche 4 bis 10, wobei das Detektorband (2) Kerben (4K) umfasst, die in vorbestimmten Abständen voneinander und relativ zu den Widerstandskomponenten (5) und zu den Schaltungsschaltern (6) gedruckt sind, um bevorzugte Schnittpunkte anzuzeigen.

12. System nach einem der Ansprüche 4 bis 11, wobei das Detektorband (2) entlang der Leiteräste (4) im Bereich der Kerben (4K) Pads P aufweist, die, nachdem das Band 2 geschnitten wurde, zur Bildung von Anschlüssen (9) ausgebildet sind.

## Revendications

1. Ruban détecteur de mouvement/déplacement (2) qui est configuré pour être agencé dans/sur une structure, comprenant:
une couche support en forme de bande (3) en matériau électriquement isolant, qui s'étend le long d'un axe longitudinal (A) et est agencée dans/sur ladite structure;
une pluralité de branches conductrices électriques (4) qui sont disposées dans/sur ladite couche de support (3);
une pluralité de composants de résistance électrique (5) qui sont agencés dans/sur ladite couche de support (2) et sont électriquement connectés les uns aux autres par au moins une branche conductrice (4) à des distances prédéterminées les uns des autres le long dudit axe longitudinal (A) et ont des résistances prédéterminées respectives;
une pluralité de circuits électriques/électroniques (6) qui sont agencés dans/sur ladite couche de support (3) et sont électriquement connectés à des sections respectives de la branche conductrice (4) comprises entre les composants de résistance suivants (5);
chacun desdits circuits électriques/électroniques (6) étant structurés pour varier la résistance aux bornes de ladite bande de détection de mouvement/déplacement d'une manière préfixée, en réponse à un mouvement/déplacement de ladite couche de support (3) au niveau dudit circuit électrique/électronique (6),
dans lequel ledit ruban détecteur de mouvement/déplacement (2) est **caractérisé en ce que** :
lesdits circuits électriques/électroniques (6) comprennent des commutateurs de circuit respectifs (6), qui sont agencés dans/sur ladite couche de support (3) dans des positions préfixées respectives et sont chacun conçus pour commuter entre un état ouvert et un état fermé, en réponse à un mouvement/déplacement de ladite couche support (3) dans lesdites positions, de manière à connecter électriquement une branche conductrice (4) à un tronçon d'une autre branche conductrice (4) compris entre deux éléments résistifs (5); la commutation d'un interrupteur de circuit (6) déterminant une variation de résistance électrique entre les bornes (9) desdites branches conductrices (4) qui dépend de la position dudit interrupteur de circuit (6) dans ledit ruban détecteur (2) et est indicative de la position (X, Y) dudit mouvement/déplacement dans ladite structure.

2. Ruban détecteur de mouvement/déplacement (2) selon la revendication 1, dans lequel lesdits commutateurs de circuit (6) comprennent:
un module de commutation électronique (7) configuré pour commuter entre l'état ouvert et l'état fermé en réponse à un signal de commande, et
un module détecteur de mouvement (8) adapté pour détecter un mouvement de ladite structure et configuré pour fournir au module interrupteur (7) le signal de commande lorsqu'un mouvement/déplacement de ladite structure a été détecté.

3. Système de surveillance structurelle (1) qui est conçu pour détecter des mouvements/déplacements dans une structure dans lequel lesdits déplacements/mouvements détectés comprennent une vibration locale et/ou une onde se propageant dans ladite structure,
ledit système de surveillance structurelle comprenant une ou plusieurs bandes de détection de mouvement/déplacement (2) selon la revendication 1.

4. Système selon la revendication 3, comprenant un ruban de mesure (15) qui comprend:
une couche de support en forme de bande (25) faite d'un matériau électriquement isolant, qui s'étend le long d'un axe longitudinal (B) et est agencée dans/sur ladite structure dans une position adjacente aux bornes (9) desdites bandes de détection (2),
une pluralité de modules électroniques (16) qui sont agencés dans ladite couche de support (25) l'un après l'autre à des distances mutuellement préfixées le long du ruban de mesure (15) au niveau des noeuds de lecture respectifs, et sont chacun électriquement connectés auxdites bornes (9) d'un ruban détecteur relatif (2) pour déterminer/mesurer une valeur indicative de la résistance électrique présente entre les bornes (9) du ruban détecteur (2) luimême;
des moyens de traitement (18) qui sont agencés dans ladite couche de support (25) et sont configurés pour recevoir des valeurs des résistances déterminées dans lesdites bandes de détection (2) à partir desdits modules électroniques (16) et pour déterminer et transmettre/fournir les coordonnées de la position d'origine du déplacement/mouvement de ladite structure; la première coordonnée (X) étant déterminée sur la base de la valeur de résistance lue; la seconde coordonnée (Y) étant déterminée en fonction du noeud de lecture de ladite résistance.

5. Système selon la revendication 4, dans lequel lesdits moyens de traitement (18) sont configurés pour communiquer la position du déplacement/mouvement détecté à un système de réseau (45).

6. Système selon la revendication 5, dans lequel le système de réseau (45) comprend un réseau domestique (21) et/ou un système de traitement à distance (22) et/ou un terminal utilisateur (23).

7. Système selon l'une quelconque des revendications 3 à 6, dans lequel lesdits commutateurs de circuit (6) comprennent:
un module de commutation électronique (7) configuré pour commuter entre l'état ouvert et l'état fermé en réponse à un signal de commande, et
un module détecteur de mouvement (8) adapté pour détecter un mouvement de ladite structure et configuré pour fournir au module interrupteur (7) le signal de commande lorsqu'un mouvement/déplacement de ladite structure a été détecté.

8. Système selon la revendication 7, dans lequel ledit module de détection de mouvement (8) comprend une bille vibrant capteur.

9. Système selon l'une quelconque des revendications 3 à 8, dans lequel:
lesdites bandes détectrices (2) sont agencées de manière à avoir les axes longitudinaux respectifs (A) approximativement parallèles les uns aux autres et de manière à avoir les bornes respectives (9) approximativement alignées les unes avec les autres;
ledit ruban de mesure (15) est agencé approximativement orthogonalement aux rubans détecteurs (2) avec un bord latéral approximativement adjacent aux bornes de connexion (9) desdits rubans détecteurs (2);
ledit système comprenant des moyens de connexion pour connecter les bornes (9) desdits rubans détecteurs (2) aux bornes de connexion respectives desdits modules de mesure électroniques (16) dudit ruban de mesure (15).

10. Système selon la revendication 7, dans lequel ledit module détecteur (8) comprend un capteur de vibration ou un capteur d'accélération ou un capteur de déformation.

11. Système selon l'une quelconque des revendications 4 à 10, dans lequel ledit ruban détecteur (2) comprend des encoches (4K) imprimées à des distances prédéterminées les unes des autres et par rapport aux composants de résistance (5) et aux commutateurs de circuit (6), indiquant points de coupe préférentiels.

12. Système selon l'une quelconque des revendications 4 à 11, dans lequel ledit ruban détecteur (2) présente, le long desdites branches conductrices (4) au niveau des encoches (4K), des plots P, qui sont destinés à former des bornes (9), après que le ruban 2 a été coupé.
